(19) **Europäisches Patentamt / European Patent Office / Office européen des brevets**

(11) **EP 1 694 143 B1**

(12) **EUROPEAN PATENT SPECIFICATION**

(45) Date of publication and mention of the grant of the patent:
**14.05.2008 Bulletin 2008/20**

(21) Application number: **04819995.4**

(22) Date of filing: **03.12.2004**

(51) Int Cl.:
*A24B 7/14* (2006.01)   *A24B 7/12* (2006.01)
*A01F 29/20* (2006.01)

(86) International application number:
**PCT/PL2004/000100**

(87) International publication number:
**WO 2005/053442 (16.06.2005 Gazette 2005/24)**

(54) **METHOD OF CONTROLLING A GAP BETWEEN KNIVES OF A CUTTING MACHINE FOR ORGANIC PLANT MATERIALS, PARTICULARLY TOBACCO MATERIALS**

VERFAHREN ZUR STEUERUNG DES ABSTANDS ZWISCHEN DEN MESSERN EINER SCHNEIDEMASCHINE FÜR ORGANISCHE PFLANZENMATERIALIEN, INSBESONDERE TABAKMATERIALIEN

PROCEDE POUR REGULER UN ESPACE ENTRE DES COUTEAUX D'UNE MACHINE DE COUPE POUR MATERIAUX VEGETAUX ORGANIQUES, NOTAMMENT TABAC

(84) Designated Contracting States:
**AT BE BG CH CY CZ DE DK EE ES FI FR GB GR HU IE IS IT LI LT LU MC NL PL PT RO SE SI SK TR**

(30) Priority: **05.12.2003 PL 36390203**

(43) Date of publication of application:
**30.08.2006 Bulletin 2006/35**

(73) Proprietor: **International Tobacco Machinery Poland Ltd.**
**26-600 Radom (PL)**

(72) Inventor: **CHOJNACKI, Wojciech, Jerzy**
**PL-26-600 Radom (PL)**

(74) Representative: **Ludwicka, Izabela**
**Patpol Sp. z.o.o.**
**ul. Nowoursynowska 162 J**
**02-776 Warszawa (PL)**

(56) References cited:
| | |
|---|---|
| **EP-A- 0 291 216** | **EP-A- 1 198 982** |
| **DE-A1- 2 932 629** | **GB-A- 649 789** |
| **US-A- 2 829 692** | **US-A- 4 205 797** |

**Description**

The invention relates to a method of controlling a gap between knives of a cutting machine for organic plant materials, particularly tobacco materials.

Known cutting machines for tobacco materials are presented, for example, in Polish patents P 353760, P 356019, P 357739, and US-A-2 829 692. A device of this type comprises a frame and a cutterhead in a form of a drum mounted within the frame, the drum having knives symmetrically arranged on its circumferential surface. A material to be cut is fed to the cutting zone by means of a transporting-compacting assembly equipped with transporters and a so called mouthpiece for squeezing and forming the material to be cut. The botttom part of the mouthpiece, called a bottom knife, is a counterpart for the knives of the cutterhead drum.

From the Polish patent of P 347304 a method and a device is known for automatic sharpening knives for cutting tobacco materials, where a knife is advanced during a normal operation of the cutting machine, and properly ground by a grinding wheel, the torque of the drive of the cutting machine being registered, then the knife being advanced according to the registered torque. The cutting machine comprises a sensor for detecting the torque of the drive, the sensor being connected to a drive of adjusting elements. The torque sensor employed in this known solution allows for control of the speed of the advancing movement of the knives, depending on the resistance forces occurring during the cutting process. The cutting machine for tobacco materials is equipped with an integrated controlling system with an assembly of servomechanisms, the system being coupled with the drive of the machine and the drive of the adjusting elements. However, this known machine does not allow for controlling the gap between the knives of the cutting machine for tobacco materials.

The gap between knives of a cutting machine for tobacco materials has the crucial influence on the quality of the end product and the power consumption of the cutting mechanism.

Manual procedures are commonly used for determining the gap between knives of a cutting machine, the procedures being possible to carry out only after stopping the cutting machine. In one known method knives are brought to contact by successive approximations. Then, the transporting-compacting assembly is retracted to a desired distance. The above method is not accurate and involves a risk of breaking or nicking the knives. In another known method several layers of an adhesive tape of a known thickness are applied onto the end face of the lower knife. After actuating the cutterhead and stopping it one counts a number of the layers which have not been cut, the number times the thickness of the tape giving the distance between the cutting knives and the lower knife. Then, a desired gap is obtained by repeating the above regulation and check procedure several times. The method is not accurate since it depends on the precision in determining the thickness of the tape and the uniformity of the thickness.

According to the invention, in a method of controlling a gap between knives of a cutting machine for organic plant materials, particularly tobacco materials, comprising a cutterhead with a drum of cutting knives and a transporting-compacting assembly with a lower knife, signals from electric sensors are used for positioning the knives by means of servomechanisms, the signals being processed in a central control unit of the cutting machine, the method being characterised in that a first sensor determines the gap between the end face of the sensor and the blade of a cutting knife in the radial direction of the cutterhead drum, a second sensor determines the gap between the frame of the cutterhead and the frame of the transporting-compacting assembly, and a third sensor determines the gap between the end face of the sensor and the edge of the lower knife, and a change $\Delta c$ of the gap between the blade of a cutting knife and the edge of the lower knife is determined according to the formula $\Delta c = \Delta a + \Delta b + \Delta d$, where $\Delta a$ is a change of the distance between the end face of the first sensor and the blade of the cutting knife, corresponding to a change of the diameter of the cutterhead drum, $\Delta b$ is a change of the distance of the frame of the cutterhead from the frame of the transporting-compacting assembly, and $\Delta d$ is a loss of the lower knife due to wearing, assuming that the initial gaps between the subassemblies of the cutting machine are known.

Preferably, the sensors are inductive sensors employing eddy currents.

Preferably, the distance between the frame of the cutterhead and the frame of the transporting-compacting assembly is measured by means of two second sensors located on the left side and on the right side, correspondingly, relative to the frame of the transporting-compacting assembly.

Preferably, analogue signals are transmitted from the electric sensors to the control unit of the cutting machine.

According to another preferred embodiment, digital signals are transmitted from the electric sensors to the control unit of the cutting machine.

Preferably, the distance changes $\Delta a$ and $\Delta b$ are measured continuously, while the parameter $\Delta d$ is measured periodically.

In a preferred embodiment, the position of a diamond for dressing the grinding wheel is adjusted by a servomechanism basing on the output of the control unit.

The inventive method of controlling a gap between knives of a cutting machine allows for maintaining a constant gap during the operation of the cutting machine, without the necessity of stopping the machine for adjusting the gap. The gap may be adjusted during the operation of the cutting machine using only a control panel or remotely from a central control unit of the cutting machine. The gap is determined basing on measurements from precise sensors, whereby it does not depend on subjective estimations of the stuff operating the machine. In the proposed solution according to the invention the precision of the measurements is not affected by the contamination of the detected surfaces since the employed sensors are only metal sensitive. Furthermore, the information concerning the gap may be displayed on a control panel of the cutting machine and sent to a central control unit.

The method according to the invention has been realised using a cutting machine for tobacco materials illustrated in the drawings, in which:

Figure 1 shows a schematic side view of a cutting machine, and
Figure 2 shows schematically a transporting-compacting assembly.

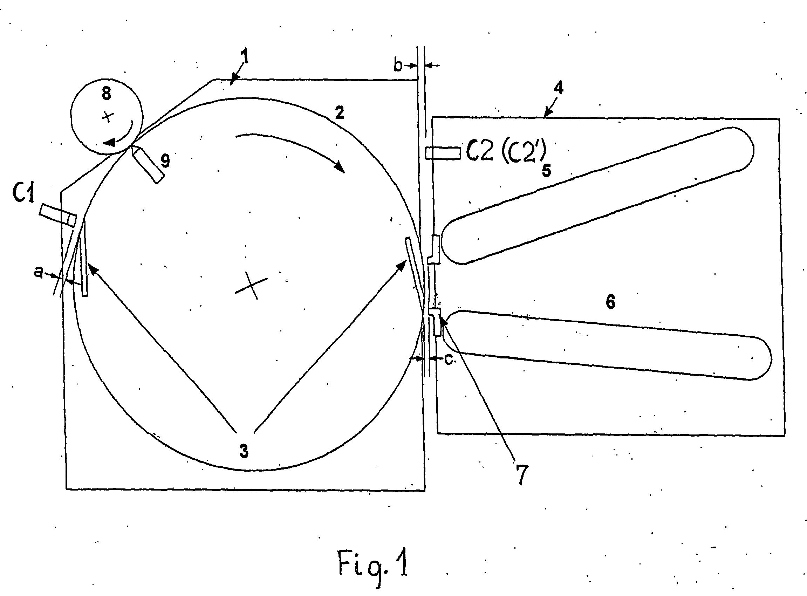

As shown in Figure 1, the cutting machine for tobacco materials comprises a cutterhead 1 in which a rotary cutterhead drum 2 is mounted having cutting knives 3 symmetrically arranged on its circumferential surface, and a transporting-compacting assembly 4 composed of a frame or body in which two transporters 5 and 6 are mounted, converging in the direction of tobacco material flow. The transporting-compacting assembly 4 is movable relative to the cutterhead 1 and it is pressed against same during operation of the cutting machine. The gap between the transporting-compacting assembly 4 and the cutterhead 1 is adjusted by servomechanisms (not shown) connected with a central control unit.

The tobacco material to be cut is compacted and transported towards the cutterhead drum 2 by the transporting-compacting assembly 4. While being cut by the cutting knives 3, the arriving tobacco material abuts against the immovable lower knife 7, rigidly attached to the transporting-compacting assembly 4.

Every cutting knife 3 is sharpened by a disk-type or a cup-type grinding wheel 8 dressed by a diamond 9. The position of the diamond 9 is adjusted by a servomechanism (not shown) connected with a central control unit of the cutting machine. As can be seen in Figure 1, the diameter of the virtual cylinder defined by the rotating blades of the cutting knives 3 depends on the position of the end face of the diamond 9.

The quality of the cutting process for tobacco material and the power consumption of the cutting machine depend on the distance at which every cutting knife 3 of the rotating cutterhead drum 2 passes the edge of the lower knife 7 of the transporting-compacting assembly 4. The distance varies due to wearing processes of the lower knife 7, a change of the diameter of the cylinder defined by the rotating blades of the cutting knives 3, and a change of the distance between the frame of the cutterhead 1 and the frame of the transporting-compacting assembly 4. Controlling the gap between the knives of the cutting machine and adjusting the extent of the cutting knives significantly affect the quality of the end product.

For controlling the gap between the knives of the cutting machine, the machine is equipped with electrical distance sensors, preferably inductive sensors utilising eddy currents effect. By means of a first sensor C1 attached to the frame of the cutterhead 1 and situated in parallel to the radial direction of the cutterhead drum 2 the gap a is measured as a distance between the end face of the sensor C1 and the blades of the cutting knives 3. An analogue or digital output of the first sensor C1 proportional to the gap a is delivered to a central control unit, whereby a change of the diameter of the cylinder defined by the rotating blades of the cutting knives 3 may be determined. If the change of the diameter of the cylinder defined by the rotating blades of the cutting knives 3 exceeds a predetermined value, the central control unit sends a signal to a servomechanism to fix the position of the diamond 9.

Additionally, a second sensor C2 measures the gap b between the frame of the cutterhead 1 and the frame of the transporting-compacting assembly 4. In a preferred embodiment two second sensors C2 and C2' are employed, located on the left side and on the right side, correspondingly, relative to the frame of the transporting-compacting assembly 4, of which the sensor C2' is invisible in the drawing. Basing on analogue or digital output signals of both sensors C2 and C2', a central control unit generates a corresponding resulting signal.

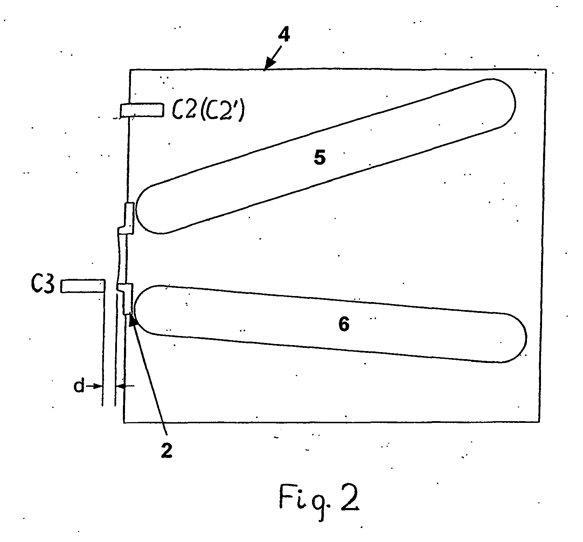

Due to wearing processes of the lower knife 7, the gap c increases between the cutting knives 3 of the cutterhead drum 2 and the lower knife 7 of the transporting-compacting assembly 4. The wearing process of the lower knife 7 is a very slow process, so the loss may be measured periodically. According to the invention, a loss due to wearing the lower knife 7 is defined as a change of the distance d, as shown in Figure 2. A third sensor C3 periodically measures the distance d between the end face of the lower knife 7, the measured value being stored in a memory of a central control unit of the cutting machine.

If one knows the initial value of the gap c between the cutting knives 3 and the lower knife 7, measured for known gaps a, b, and d between the subassemblies of the cutting machine, according to the invention the change $\Delta c$ is determined as the algebraic sum of the gaps a, b, and d, according to the formula:

$$\Delta c = \Delta a + \Delta b + \Delta d,$$

where the measurements for Δa and Δs are continuous measurements and the measurement for Δd is a periodical measurement. Basing on the measured results the central control unit of the cutting machine generates signals transmitted to servomechanisms adjusting the gap b between the frame of the cutterhead 1 and the frame of the transporting-compacting assembly 4 to compensate the changes of the gap c between the knives of the cutting machine.

Example.

Four inductive sensors utilising eddy currents were employed in a cutting machine for tobacco materials shown schematically in Figures 1 and 2:

-    The sensor C1 was mounted such that its end face was at a distance of 50% to 75% of the measuring range, preferably 60%, from the virtual surface of the cylinder defined by the rotating blades of the cutting knives 3. The measuring range of the employed sensor was 1.5 mm.
-    The sensors C2 and C2' were mounted such that their end faces were at a distance of 50% to 80% of the measuring range, preferably 70%, from the frame of the cutterhead 1. The measuring range of the employed sensors was 5 mm.
-    The sensor C3 was mounted such that, in the measuring position, its end face was at a distance of 40% to 80% of the measuring range, preferably 60%, from the end face of the lower knife 7 being not worn yet.

The repeatability of the measurements of the sensors C1 and C3 was better than 0.03 mm while better than 0.04 mm for the sensors C2 and C2'. The repeatability dΔc of the determination of the change of the gap between the knives of the cutting machine, according to the formula:

$$\Delta c \;=\; \Delta a \;+\; \Delta b \;+\; \Delta d$$

was not poorer than:

$$d\Delta c \;\leq\; (0.03 \;+\; 0.04 \;+\; 0.03)\;\; mm$$

$$d\Delta c \;\leq\; 0.1\;\; mm$$

The presented solution according to the invention allowed for safe adjusting the gap c between the knives of the cutting machine equal to 0.15 mm without any risk of collision between the cutting knives 3 and the lower knife 7.

**Claims**

1.    A method of controlling a gap between knives of a cutting machine for organic plant materials, particularly tobacco materials, comprising a cutterhead with a drum of cutting knives and a transporting-compacting assembly with a lower knife, wherein signals from electric sensors are used for positioning the knives by means of servomechanisms, the signals being processed in a central control unit of the cutting machine, **characterised in that** a first sensor (C1) determines the gap (a) between the end face of the sensor (C1) and the blade of a cutting knife (3) in the radial direction of the cutterhead drum (2), a second sensor (C2) determines the gap (b) between the frame of the cutterhead (1) and the frame of the transporting-compacting assembly (4), and a third sensor (C3) determines the gap (d) between the end face of the sensor (C3) and the edge of the lower knife (7), and a change Δc of the gap (c) between the blade of the cutting knife (3) and the edge of the lower knife (7) is determined according to the formula Δc = Δa + Δb + Δd, where Δa is a change of the distance between the end face of the first sensor (C1) and the blade of the cutting knife (3), corresponding to a change of the diameter of the cutterhead drum (2), Δb is a change of the distance of the frame of the cutterhead (1) from the frame of the transporting-compacting assembly (4), and Δd is a loss of the lower knife (7) due to wearing, assuming that the initial gaps (a, b, c, and d) between the subassemblies of the cutting machine are known.

**2.** The method according to claim 1, **characterised in that** the sensors (C1, C2, C3) are inductive sensors utilising eddy currents.

**3.** The method according to claim 1, **characterised in that** the distance (b) between the frame of the cutterhead (1) and the frame of the transporting-compacting assembly (4) is measured by two second sensors (C2, C2') located on the left side and on the right side, correspondingly, relative to the frame of the transporting-compacting assembly (4).

**4.** The method according to claim 1, **characterised in that** analogue signals are transmitted from the electric sensors to the control unit of the cutting machine.

**5.** The method according to claim 1, **characterised in that** digital signals are transmitted from the electric sensors to the control unit of the cutting machine.

**6.** The method according to claim 1, **characterised in that** the distance changes $\Delta a$ and $\Delta b$ are measured continuously, while the parameter $\Delta d$ is measured periodically.

**7.** The method according to claim 4 or 5, **characterised in that** the position of a diamond (9) for dressing the grinding wheel (8) is adjusted by a servomechanism basing on the output of the control unit.

**Patentansprüche**

**1.** Verfahren, zur Kontrolle einer Lücke zwischen Messern eines Schneidgeräts für organische Pflanzenmaterialien, insbesondere Tabakmaterialien, umfassend einen Schneidkopf mit einer Trommel aus Schneidmessern sowie einer Transport-Zusammenpress-Vorrichtung mit einem unteren Messer, wobei Signale von elektrischen Sensoren zum Positionieren der Messer mittels Servosystemen verwendet werden, und wobei die Signale in einer zentralen Steuereinheit des Schneidgeräts verarbeitet werden, **dadurch gekennzeichnet, dass** ein erster Sensor (C1) die Lücke (a) zwischen der Stirnfläche des Sensors (C1) und der Klinge eines schneidenden Messers (3) in Radialrichtung der Schneidkopftrommel (2) bestimmt, dass ein zweiter Sensor (C2) die Lücke (b) zwischen dem Rahmen des Schneidkopfs (1) und dem Rahmen der Transport-Zusammenpress-Vorrichtung (4) bestimmt, und dass ein dritter Sensor (C3) die Lücke (d) zwischen der Stirnfläche des Sensors (C3) und dem Rand des unteren Messers (7) bestimmt, wobei eine Veränderung von $\Delta c$ der Lücke (c) zwischen der Klinge des schneidenden Messers (3) und dem Rand des unteren Messers (7) durch die Formel $\Delta c = \Delta a + \Delta b + \Delta d$ bestimmt wird, wobei $\Delta a$ eine Veränderung des Abstands zwischen der Stirnfläche des ersten Sensors (C1) und der Klinge des schneidenden Messers (3) ist, entsprechend einer Veränderung im Durchmesser der Schneidkopftrommel (2), $\Delta b$ eine Veränderung des Abstands des Rahmens des Schneidkopfs (1) vom Rahmen der Transport-Zusammenpress-Vorrichtung (4) ist und $\Delta d$ ein Verlust des unteren Messers (7) aufgrund von Abnutzung ist, vorausgesetzt, dass die Anfangslücken (a, b, c, d) zwischen den Untervorrichtungen des Schneidgeräts bekannt sind.

**2.** Verfahren nach Anspruch 1, **dadurch gekennzeichnet, dass** die Sensoren (C1, C2, C3) Induktivsensoren sind, die Wirbelströme verwenden.

**3.** Verfahren nach Anspruch 1, **dadurch gekennzeichnet, dass** der Abstand (b) zwischen dem Rahmen des Schneidkopfes (1) und dem Rahmen der Transport-Zusammenpress-Vorrichtung (4) von zwei zweiten Sensoren (C2, C2') gemessen wird, die auf der linken Seite bzw. auf der rechten Seite bezüglich des Rahmens der Transport-Zusammenpress-Vorrichtung (4) angeordnet sind.

**4.** Verfahren nach Anspruch 1, **dadurch gekennzeichnet, dass** Analogsignale von den elektrischen Sensoren an die Steuereinheit des Schneidgeräts übermittelt werden.

**5.** Verfahren nach Anspruch 1, **dadurch gekennzeichnet, dass** digitale Signale von den elektrischen Sensoren an die Steuereinheit des Schneidgeräts übermittelt werden.

**6.** Verfahren nach Anspruch 1, **dadurch gekennzeichnet, dass** die Abstandsveränderungen $\Delta a$ und $\Delta b$ kontinuierlich gemessen werden, während der Parameter $\Delta d$ periodisch gemessen wird.

**7.** Verfahren nach Anspruch 4 oder 5, dadurch gekenn 25 zeichnet, dass die Position eines Diamanten (9) zum Verkleiden des Schleifrads (8) durch ein Servosystem justiert wird, basierend auf der Ausgabe der Steuereinheit.

**Revendications**

1. Procede de commande dun espace entre des couteaux d'une machine de coupe pour des matieres organiques vegetales, en particulier des matieres de tabac, comprenant une t6te de coupe avec un tambour de couteaux de coupe et un ensemble de transport et de compactage avec un couteau inferieur, daps lequel des signaux provenant de capteurs electriques sont utilises pour positionner fes couteaux au moyen de mecanismes asservis, fes signaux etant traites daps une unite centrale de commande de la machine de coupe, **caracterise en ce qu'**un premier capteur (C1) determine l'espace (a) entre la face d'extremite du capteur (C1) et la lame d'un couteau de coupe (3) daps la direction radiate du tambour de tetes de coupe (2), un deuxieme capteur (C2) determine {'espace (b) entre le chassis de la t6te de coupe (1) et fe chassis de l'ensemble de transport et de compactage (4) et un troisieme capteur (C3) determine l'espace (d) entre la face d'extremite du capteur (C3) et le bord du couteau inferieur (7), et une variation $\Delta c$ de i'espace (c) entre la lame du couteau de coupe (3) et le bord du couteau inferieur (7) est determines par la formule $\Delta c = \Delta a + \Delta b + \Delta d$, oü $\Delta a$ est une variation de la distance entre la face d'extremite du premier capteur (C1) et la lame du couteau de coupe (3), correspondant a une variation du diametre du tambour de tetes de coupe (2), $\Delta b$ est une variation de la distance du chassis de la t6te de coupe (1) par rapport au chassis de l'ensemble de transport et de compactage (4) et $\Delta d$ est une pens du couteau inferieur (7) due a l'usure, en supposant que les espaces initiaux (a, b, c et d) entre fes sons-ensembles de la machine de coupe sont connus.

2. Procede selon la revendication 1, **caracterise en ce que** les capteurs (C1, C2, C3) sont des capteurs inductifs utilisant des courants de Foucault.

3. Procede selon la revendication 1, **caracterise en ce que** la distance (b) entre le chassis de la tete de coupe (1) et le chassis de l'ensemble de transport et de compactage (4) est mesuree par deux deuxiemes capteurs (C2, C2') situes sur le côte gauche et sur le côte droit, en correspondance, par rapport au chassis de l'ensemble de transport et de compactage (4).

4. Procede selon la revendication 1, **caracterise en ce que** des signaux analogiques sont transmis par les capteurs efectriques vers l'unité de commande de la machine de coupe.

5. Procede selon fa revendication 1, **caracterise en ce que** des signaux numeriques sont transmis par les capteurs electriques vers l'unité de commande de la machine de coupe.

6. Procede selon la revendication 1, **caracterise en ce que** les variations de distance $\Delta a$ et $\Delta b$ sont mesurees en permanence, alors que le parametre $\Delta d$ est mesure periodiquement.

7. Procede selon la revendication 4 ou 5, **caracterise en ce que** la position 20 d'un diamant (9) pour dresser fa meule (8) est ajustee par un mecanisme asservi base sur la sortie de l'unité de commande.

Fig. 1

EP 1 694 143 B1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 353760
- US 356019 A
- PL 357739
- US 2829692 A
- US 347304 A